# EUROPÄISCHE PATENTSCHRIFT

(11) **EP 1 146 410 B1**
(45) Veröffentlichungstag und Bekanntmachung des Hinweises auf die Patenterteilung: **04.08.2010**
(21) Anmeldenummer: 01109139.4
(22) Anmeldetag: 12.04.2001
(51) Int. Cl.: G05G 1/08

(54) **Bedienvorrichtung**
Control device
Dispositif de commande

(30) Priorität: 15.04.2000 DE 10018795
(43) Veröffentlichungstag der Anmeldung: 17.10.2001
(73) Patentinhaber: ROBERT BOSCH GMBH, 70442 Stuttgart (DE)
(72) Erfinder: Rosenbaum, Thomas, 71282 Hemmingen (DE); Kossira, Martin, 71672 Marbach am Necker (DE)

(56) Entgegenhaltungen:
- EP-A2- 0 366 132
- DE-A1- 19 712 048
- DE-A1- 19 730 297
- US-A- 5 187 630
- US-A- 5 912 661
- US-A- 6 154 201
- US-B1- 6 636 197

## Beschreibung

### Stand der Technik

Die Erfindung geht von einer Bedienvorrichtung mit einem zur Erzeugung eines Stellsignals um eine Achse drehbaren Bedienelement und mit einem Schaltelement zur Erzeugung eines Schaltsignals, sowie einer Auswertung zur Erzeugung von Steuersignalen aufgrund eines Stell- oder Schaltsignals nach der Gattung des unabhängigen Patentanspruchs aus.

In dem Prospekt "Der Pluspunkt im Auto. Mobile Kommunikation 1999." der Firma Blaupunkt-Werke GmbH, Hildesheim, DE, sind Autoradiogeräte der Skyline- und der Funline-Serie dargestellt, die über einen Drehknopf zur Einstellung einer Wiedergabelautstärke verfügen. Der Drehknopf ist konzentrisch um einen Druckknopf herum angeordnet, der als Einschalter, sowie bei eingeschaltetem Gerät je nach Betätigungsdauer als Ausschalter oder zur Stumm- oder Leiseschaltung (Mute) einer aktuellen Audiowiedergabe dient.

Aus EP 0 366 132 A2 ist eine Bedienvorrichtung mit einem um eine Achse drehbaren Drehschalter zur Erzeugung eines Stellsignals bekannt, der zur Erzeugung eines Schaltsignals in axialer Richtung, nämlich durch Ausüben einer Kraft auf den Drehknopf des Schalters, verschiebbar ist. Dieser kombinierte Dreh-Druckschalter ersetzt einen herkömmlichen Drehschalter und einen Tastschalter. Mittels des Dreh-Druckschalters werden Steuersignale aufgrund entweder eines Stell- oder eines Schaltsignals erzeugt. Eine kombinatorische Auswertung sowohl eines Stell- als auch eines Schaltsignals ist ebenso wie bei den beschriebenen Blaupunkt-Autoradiogeräten nicht vorgesehen.

Darüber hinaus ist bei Einsatz des in EP 0 366 132 A2 beschriebenen Dreh-Druckschalters in für den Einsatz in Kraftfahrzeugen vorgesehenen Geräten eine Fehlbedienung der Geräte durch versehentliches Erzeugen von Schaltimpulsen bei eigentlich gewünschter Drehung des Drehschalters infolge beispielsweise vom Fahrzeugantrieb oder Fahrbahnunebenheiten herrührenden Vibrationen des Geräts nicht ausgeschlossen.

Aus der DE 197 30 297 A1 ist eine Bedienvorrichtung mit zweidimensionaler Dialogbewegung zum Anwählen und Auswählen von Funktionen und Funktionsgruppen, insbesondere zur Anwendung in Kraftfahrzeugen bekannt. Es ist ein einziger Drehschalter vorgesehen, wobei eine horizontale Verschiebung eines Cursors in einer Anzeige durch ein Drehen des Drehschalters erfolgt, während eine vertikale Verschiebung durch ein Drehen und Drücken des Drehschalters erfolgt.

Aus der US 5,912,661 ist eine Computermaus bekannt, bei der eine Eingabe durch eine Verschiebung eines Drehrades senkrecht zu einer Drehachsenrichtung des Drehrades erfolgt.

### Vorteile der Erfindung

Das erfindungsgemäße Verfahren mit den Merkmalen des unabhängigen Patentanspruchs hat demgegenüber den Vorteil, dass durch eine kombinatorische Auswertung von durch das Bedienelement erzeugten Stellsignalen und durch das Schaltelement erzeugten Schaltsignalen weitere Steuersignale erzeugbar sind.

Erfindungsgemäß ist eine Ausbildung des Schaltelements zur Erzeugung eines Schaltsignals aufgrund einer axialen Verschiebung des oder eines Teils des Bedienelements. Diese Lösung ist besonders platzsparend, was insbesondere im Fall von in Kraftfahrzeugen betriebenen Geräten, wie beispielsweise einem Navigationsgerät, Autoradio oder Mobiltelefon aufgrund knappen verfügbaren Platzes auf der Gerätefrontplatte von Vorteil ist. Weiter ermöglicht diese

Lösung ein besonders einfaches Auffinden und Bedienen des zur Bedienung des Geräts nötigen Bedienelements auch ohne Sichtkontakt. Eine Ablenkung eines Fahrzeugführers durch die Bedienung eines in einem Fahrzeug betriebenen Geräts wird somit verringert.

Bei einer besonders vorteilhaften Ausführungsform der Erfindung ist eine Ausbildung des Schaltelements zur Erzeugung von mehr als einem Schaltsignal bei Verschiebbarkeit des drehbaren Bedienelements oder eines Teils des Bedienelements entlang der Achse in mehr als eine von der Ruheposition abweichende Position vorgesehen. Dies ermöglicht die Erzeugung zusätzlicher weiterer Steuersignale und damit einen zusätzlich erweiterten Funktionsumfang der Bedienvorrichtung. Insbesondere kann eine erste solche von der Ruheposition abweichende Position durch Druck auf das Bedienelement oder einen Teil des Bedienelements entlang dessen Drehachse, eine weitere, von der Ruheposition abweichende Position, durch Zug am Bedienelement oder einem Teil des Bedienelements erreicht werden.

Eine erfindungsgemäße Ausführungsform des erfindungsgemäßen Verfahrens zeichnet sich vorteilhaft durch eine Verwendung eines in axialer Richtung unverschiebbaren Drehknopfs zur Betätigung des drehbaren Bedienelements und ein im Zentrum des Drehknopfs angeordnetes, entlang der Achse verschiebbares Betätigungselement zur Betätigung des Schaltelements aus. Beispielsweise bei Einsatz der Bedienvorrichtung in für den Einsatz in Kraftfahrzeugen vorgesehenen Geräten verhindert die mechanische Entkopplung des Drehknopfes vom Betätigungselement des Schaltelements eine versehentliche Auslösung von Schaltsignalen bei Betätigung des Drehknopfes, beispielsweise bei Vibrationen des Geräts infolge von Einflüssen des Fahrzeugantriebs oder Fahrbahnunebenheiten. Vielmehr ermöglicht der axial unverschiebbare Drehknopf eine sichere Führung oder Abstützung der bedienenden Hand des Benutzers, so daß eine sichere Bedienung des Betätigungselements des Schaltelements durch einen Finger der abgestützten Hand gewährleistet wird.

### Zeichnungen

Ausführungsbeispiele der Erfindung sind in den Zeichnungen dargestellt und werden nachfolgend näher erläutert.

Es zeigen
Figur 1 eine vereinfachte Darstellung der erfindungsgemäßen Bedienvorrichtung mit einem Bedienelement gemäß einem ersten Ausführungsbeispiel der Erfindung,
Figur 2 eine vereinfachte Darstellung einer Anordnung zur Erfassung einer Drehung des drehbaren Bedienelements der erfindungsgemäßen Bedienvorrichtung,
Figur 3 ein Blockschaltbild eines mit der erfindungsgemäßen Bedienvorrichtung bedienbaren Geräts mit einer vereinfachten Detaildarstellung eines zweiten Ausführungsbeispiels der erfindungsgemäßen Bedienvorrichtung, und
Figuren 4A bis 4P die auf einer Anzeigeeinheit eines über eine erfindungsgemäße Bedienvorrichtung verfügenden Geräts dargestellten Inhalte am konkreten Beispiel einer Zielorteingabe an einem Fahrzeugnavigationsgerät.

### Beschreibung der Ausführungsbeispiele

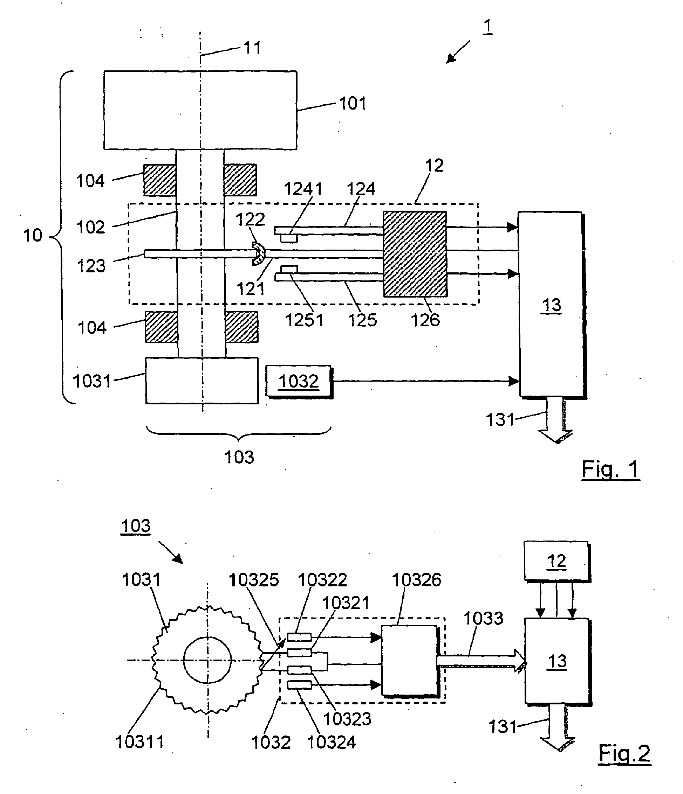

Figur 1 zeigt eine vereinfachte Darstellung der erfindungsgemäßen Bedienvorrichtung 1 mit einem Bedienelement gemäß einem ersten Ausführungsbeispiel der Erfindung.

Die Bedienvorrichtung 1 umfaßt ein um eine Drehachse 11 drehbares Bedienelement 10 mit einem auf einen Schaft 102 aufgesetzten Drehknopf 101, der in einer Lagerung 104 drehbar gelagert ist. Eine Drehung des Bedienelements 10 wird durch eine Dreherfassungseinrichtung 103 in ein eine Drehrichtung und einen überstrichenen Drehwinkel anzeigendes Stellsignal umgesetzt.

Die in Figur 2 dargestellte Dreherfassungseinrichtung 103 besteht im vorliegenden Fall aus einem mit dem Schaft 102 des Bedienelements 10 verbundenen Zahnrad 1031, dessen Zahnflanken als Licht reflektierende Oberflächen ausgeführt sind und einem optischen Aufnehmer 1032. Der Aufnehmer 1032 umfaßt zwei gebündelte Lichtstrahlen in Richtung des Zahnrades aussendende Leuchtmittel 10321 und 10323, vorzugsweise Leuchtdioden, sowie zwei im optischen Bereich sensibilisierte Halbleiterelemente 10322 und 10324 zur Detektion durch die Zahnflanken des Zahrades 1031 reflektierten Licht 10325. Aufgrund der wechselweisen Beleuchtung vorder- und rückseitiger Zahnflanken des Zahnrades 1031 während einer Drehung des Bedienelements 101 werden die beiden lichtempfindlichen Halbleiterelemente 10322 und 10324 durch die von den Zahnflanken reflektierten Lichtstrahlen der Leuchtmittel 10321 und 10323 wechselweise beleuchtet und nicht beleuchtet. Die beiden Leuchtdioden 10321 und 10323 und die beiden zugehörigen lichtempfindlichen Halbleiterelemente 10322 und 10324 sind zueinander in einem Abstand *n* ± ¼ des Abstandes zweier benachbarter Zahnspitzen, mit n einer ganzen Zahl einschließlich null, angeordnet. Aufgrund dieser Anordnung ergeben sich als Ausganggsignale der lichtempfindlichen Halbleiterelemente 10322 und 10324 Impulsfolgen, die zueinander eine Phasenverschiebung von ¼ oder ¾ einer Periode der Impulsfolgen, je nach Drehrichtung aufweisen. Die Zahl der von einem der lichtempfindlichen Elemente 10322 oder 10324 gemessenen Impulse stellt ein diskretes Maß für den durch den Aufnehmer 1032 und den über den Schaft 102 mit dem Zahnrad 1031 verbundenen Drehknopf 101 überstrichenen Drehwinkel dar. Die Auflösung des überstrichenen Drehwinkels, also die Zahl der erzeugten Impulse oder Inkremente pro Drehwinkeleinheit, ist durch die Zahl der auf den Umfang des Zahnrades 1031 verteilten Zähne vorgegeben. Durch Verknüpfung der Impulsfolgen beider lichtempfindlicher Elemente 10322 und 10324 ist darüber hinaus ein die Drehrichtung anzeigendes Signal erzeugbar. Die Auswertung der Impulsfolgen zur Bildung des den überstrichenen Drehwinkel und die Drehrichtung anzeigenden Stellsignals 1033 erfolgt in einer Vorauswertung 10326, die als Teil des Aufnehmers 1032 realisiert ist.

Gemäß einer modifizierten Ausführungsform der Vorauswertung 10326 ist die Auflösung des in Abhängigkeit einer Drehung des Bedienelements 10 erzeugten Stellsignals durch Verknüpfung der Signale der beiden lichtempfindlichen Halbleiterelemente 10322 und 10324 verdoppelbar. Ebenso ist die Auflösung, also die Zahl der pro Drehwinkel erzeugten Inkremente, durch Zuordnung eines einzigen Inkrements zu einer Mehrzahl durch ein lichtempfindliches Halbleiterelement 10322 oder 10324 erzeugter Impulse verringerbar. Die Vorgabe der Winkelauflösung erfolgt dabei vorteilhafterweise kontextabhängig mittels eines der Vorauswertung 10326 zugeführten, in der Figur nicht dargestellten Steuersignals.

Die Bedienvorrichtung 1 umfaßt weiterhin ein Schaltelement 12, das gemäß dem in Figur 1 dargestellten Ausführungsbeispiel durch axiale Verschiebung des Bedienelements 10 entlang der Achse 11 betätigt wird.

Das Schaltelement 12 ist in Form mindestens eines ersten festehenden Kontakts 125 mit einer Kontaktperle 1251 und eines durch das Bedienelement 10 in Richtung auf den feststehenden Kontakt 125 bewegbaren Kontakts 121 ausgeführt. Der als elektrisch leitende Federzunge ausgelegte bewegbare Kontakt 121 ist an einem Ende in einer Lagerung 126 fixiert. Am beweglichen Ende des bewegbaren Kontakts 121 befindet sich eine Führung 122. Die Führung 122 wirkt mit einem auf dem Schaft 102 des Bedienelements 10 fest angeordneten Betätigungsring 123 derart zusammen, daß bei axialer Verschiebung des Bedienelements 10 durch Druck auf den Bedienknopf 101 die Verschiebung durch den Betätigungsring 123 über die Führung 122 auf die Federzunge 121 übertragen und diese auf die Kontaktperle 1251 des feststehenden Kontakts gepreßt wird. Die Federzunge 121 übt dabei eine der Verschiebung des Bedienelements 10 entgegenwirkende Kraft auf das Bedienelement 10 aus, so daß nach Aufhebung der Krafteinwirkung auf den Bedienknopf 101 der Kontakt zwischen der Federzunge 121 und dem feststehenden Kontakt 125 geöffnet und das Bedienelement 10 in seine Ruhelage zurückverschoben wird. Bedienelement 10, erster Kontakt 125 und bewegbarer Kontakt 121 bilden somit einen durch Druck auf den Drehknopf 101 betätigbaren Tastschalter zur Erzeugung eines ersten Schaltsignals.

Gemäß dem in Figur 1 dargestellten Ausführungsbeispiel ist ein zweiter feststehender Kontakt 124 mit einer Kontaktperle 1241 vorgesehen, gegen den die Federzunge 121 bei axialer Verschiebung des Bedienelements 10 durch Zug am Bedienknopf 101 gepreßt wird. Analog dem ersten Tastschalter 10, 125, 121 bilden Bedienelement 10, zweiter feststehender Kontakt 124 und bewegbarer Kontakt 121 einen durch Zug am Bedienknopf 101 betätigbaren zweiten Tastschalter zur Erzeugung eines zweiten Schaltsignals.

Sowohl die von der Dreherfassungseinrichtung 103 erzeugten Stellsignale, als auch die vom Schaltelement 12 erzeugten Schaltsignale sind zur Bildung von Steuersignalen 131 einer Auswertung 13 zugeführt. Die Auswertung 13 ist insbesondere zur Erzeugung eines ersten Stellsteuersignals in Reaktion auf ein durch alleinige Drehung des Drehknopfes 101 um die Achse 11 erzeugten Stellsignals, des weiteren mindestens eines zweiten Stellsteuersignals in Reaktion auf eine Drehung des Drehknopfs 101 bei gleichzeitig betätigtem Schaltelement 12 ausgelegt, sowie eines Schaltsteuersignals durch alleinige Betätigung des Schaltelements 12 ausgelegt.

Im Falle eines Schaltelements 12 zur Erzeugung mindestens zweier voneinander verschiedener Schaltsignale, wie im vorliegenden Fall zweier Tastschalter ist die Auswertung weiter zur Erzeugung eines dritten Stellsteuersignals bei gleichzeitiger Betätigung des zweiten Tastschalters und Drehung des Drehknopfs, sowie zur Erzeugung eines zweiten Schaltsteuersignals bei alleiniger Betätigung des zweiten Tastschalters ausgelegt.

Weiter kann die Auswertung auch zur Erzeugung weiterer Schaltsteuersignale durch zusätzliche Auswertung der Dauer der Betätigung des oder eines der beiden Tastschalter ausgelegt sein. So kann beispielsweise bei Schließen des ersten Tastschalters 121, 125 für eine kurze Zeitdauer von beispielsweise weniger als 1,5 Sekunden ein erstes Schaltsteuersignal, bei Schließen desselben Tastschalters für eine längere Zeitdauer von beispielsweise länger als 2 Sekunden ein zweites Schaltsteuersignal erzeugt werden.

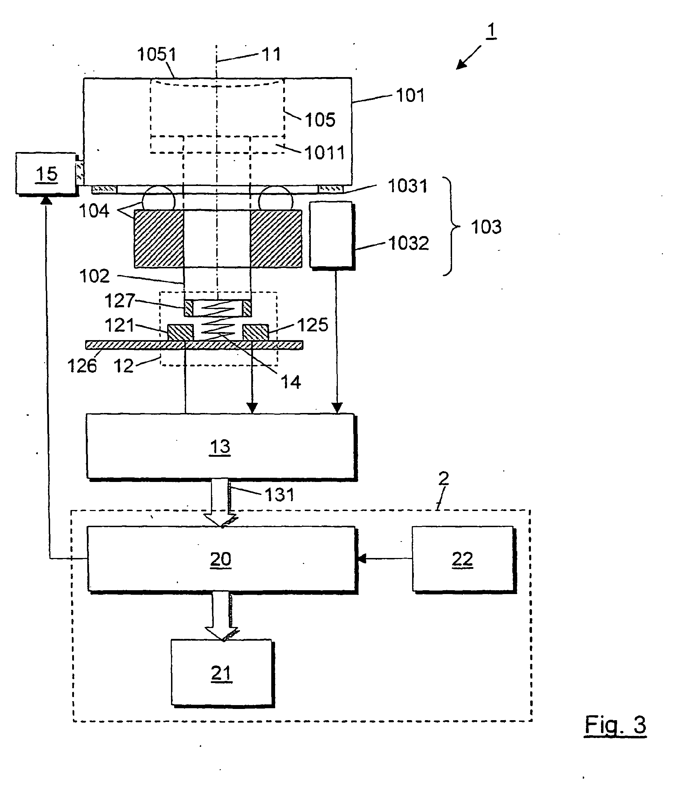

Figur 3 zeigt ein Blockschaltbild eines mit der erfindungsgemäßen Bedienvorrichtung bedienbaren Geräts mit einer vereinfachten Detaildarstellung eines zweiten Ausführungsbeispiels der erfindungsgemäßen Bedienvorrichtung 1.

Die Bedienvorrichtung 1 umfaßt ein um eine Drehachse 11 drehbares Bedienelement 10 mit einem Drehknopf 101, der in einer Lagerung 104, beispielsweise einem Kugellager, drehbar gelagert ist. Die Lagerung nimmt zusätzlich in axialer Richtung auf den Drehknopf 101 einwirkende Kräfte auf, so daß dieser in axialer Richtung unverschiebbar ist. Der Drehknopf 101 bietet somit für die bedienende Hand oder die bedienenden Finger der Hand des Benutzers eine Abstützung oder Führung. Eine Drehung des Bedienelements 10 wird durch eine Dreherfassungseinrichtung 103 in ein eine Drehrichtung und einen überstrichenen Drehwinkel anzeigendes Stellsignal umgesetzt.

Die Dreherfassungseinrichtung 103 umfaßt einen an der Unterseite des Drehknopfs 101 angeordneten Zahnkranz 1031, wobei die Zahnflanken der Zähne des Zahnkranzes 1031 eine Licht reflektierende Oberfläche aufweisen. Weiter umfaßt die Dreherfassungseinrichtung einen optischen Aufnehmer 1032 zur Abtastung des Zahnkranzes 1031 und zur Erzeugung eines Stellsignals in Abhängigkeit einer Drehung des Drehknopfs 101. Zahnkranz 1031 und Aufnehmer 1032 wirken wie im Zusammenhang mit Figur 2 beschrieben zusammen.

Die Bedienvorrichtung 1 umfaßt weiter ein Schaltelement 12 zur Erzeugung eines Schaltsignals. Beim in Figur 3 dargestellten Ausführungsbeispiel ist das Betätigungselement 105, 102 des Schaltelements 12 als Teil des Drehknopfes 101 ausgebildet. Der Drehknopf 101 weist eine Ausnehmung in Form eines nach oben offenen Sacklochs 1011 auf. Eine gegenüber dem Durchmesser des Sacklochs dünnere Bohrung setzt die Ausnehmung 1011 durch den gesamten Drehknopf 101 nach unten hin fort. In das Sackloch 1011 ist ein Stempel 105 axial beweglich eingesetzt, der an seiner Oberseite ein Griffmulde 1051 aufweist und in seiner Ruhestellung mit dem oberen Rand des Drehknopfs 101 bündig abschließt. Durch Druck auf den Stempel 105 ist dieser in axialer Richtung in das Sackloch 1011 hinein verschiebbar. Eine Verlängerung des Stempels 105 bildet einen durch die Bohrung des Drehknopfs 101 hindurchragenden Schaft 102, der durch die Lagerung 104 geführt ist und radial auf den Drehknopf 101 einwirkende Kräfte aufnimmt. Zwischen dem unteren Ende des Schafts 102 und einer unterhalb des Drehknopfs 101 angeordneten Leiterplatte 126 ist eine Spiralfeder 14 angeordnet, die bei axialer Verschiebung des Stempels 105 infolge eines Drucks auf den Stempel 105 eine der Verschiebung entgegenwirkende Rückstellkraft erzeugt, die den Stempel 105 bei nachlassen des Drucks in seine axiale Ausgangslage verschiebt. Weiterhin ist am unteren Ende des Schafts 102 ein leitender Kontaktring 127 angeordnet, der bei axialer Verschiebung des Stempels 105 auf zwei auf der Leiterplatte angeordnete Kontakte 121 und 125 gepreßt wird und diese somit miteinander leitend verbindet. Der Stempel 105 und der Drehknopf 101 sind vorzugsweise unabhängig voneinander bedienbar und in einem in der Zeichnung nicht dargestellten Ausführungsbeispiel durch eine Unterteilung zwischen dem Druchknopf und dem Stempel für einen Benutzer fühlbar getrennt angeordnet.

Die beschriebene Anordnung aus Stempel 105, Schaft 102, Rückstellfeder 14, Kontaktring 127 und Gegenkontakten 121 und 125 stellt somit einen Tastschalter dar, der durch Druck auf den Stempel 105 und axiale Verschiebung de Stempels 105 infolge der ausgeübten Druckkraft betätigt wird.

Sowohl die von der Dreherfassungseinrichtung 103 erzeugten Stellsignale, als auch das von dem Schaltelement 12 erzeugte Schaltsignal sind einer Auswertung 13 zur Erzeugung von Steuersignalen 131 zugeführt. Die durch die Auswertung 13 erzeugbaren Steuersignale sind dieselben, die im Zusammenhang mit Figur 1 unter der Voraussetzung eines einzigen Tastschalters beschrieben sind.

Die beschriebene Bedienvorrichtung sowohl des ersten, als auch des zweiten Ausführungsbeispiels ist zur Bedienung eines elektrischen Geräts 2 vorgesehen. Sie eignet sich in besonderer Weise für in Kraftfahrzeugen betriebene elektrische Geräte, wie beispielsweise eine Klimaanlage, Geräte der Unterhaltungselektronik, wie insbesondere ein Autoradio, ein Fahrzeugnavigationsgerät oder beispielsweise ein Funktelefon.

Das mittels der Bedienvorrichtung bedienbare elektrische Gerät 2 umfaßt eine Steuerung 20, der die Steuersignale 131 der Auswertung 13 der Bedienvorrichtung zugeführt sind. Die Steuerung 20 ist vorzugsweise in Form eines programmgesteuerten Mikroprozessors ausgeführt, wobei die von der Steuerung 20 zu bewältigenden Aufgaben als Teil eines Gerätebetriebsprogramms implementiert sind.

An die Steuerung 20 ist eine Anzeigeeinheit 21 angeschlossen, auf der beispielsweise Auswahllisten, in der Fachwelt auch als Menue bezeichnet, für auszuwählende oder zu verstellende Funktionen oder Betriebsparameter des zu bedienenden Geräts dargestellt oder darstellbar sind. Diese Auswahllisten können sowohl ein-, als auch mindestens zweidimensional angelegt sein.

Im Falle einer zweidimensional angelegten Auswahlliste kann die erfindungsgemäße Bedienvorrichtung zur Steuerung einer Markierung, üblicherweise auch als Cursor bezeichnet, beispielsweise derart genutzt werden, daß bei Erzeugung eines ersten Stellsteuersignals durch alleiniges Drehen des Drehknopfs 101 der damit gesteuerte Cursor in horizontaler Richtung durch die Elemente der Auswahlliste, bei Erzeugung eines zweiten Stellsteuersignals durch Drehen des Drehknopfs 101 und gleichzeitige Betätigung des Schaltelements 12 der Cursor in vertikaler Richtung durch die Elemente der Auswahlliste verschoben wird.

Zusammengefaßt ergeben sich damit in Abhängigkeit eines mittels des drehbaren Bedienelements 10 erzeugten Stellsignals und des Schaltelements 12 erzeugten Schaltsignals folgende Aktionen.

| Schaltelement | Drehb. Bedienelement | Aktion |
|---|---|---|
| nicht betätigt | nicht betätigt | keine |
| nicht betätigt | Drehung links | Verschiebung Cursors nach links |
| nicht betätigt | Drehung rechts | Verschiebung Cursor nach rechts |
| betätigt | Drehung links | Verschiebung Cursor nach oben |
| betätigt | Drehung rechts | Verschiebung Cursor nach unten |
| Ende der Betätigung | nicht betätigt | Abschluß der Steuerung, Auswahl der mit dem Cursor erreichten Position |

Weiter kann beispielsweise auch das erste Stellsteuersignal zur Auswahl eines zu verstellenden Parameters aus einer Auswahlliste, das zweite Stellsteuersignal zur Verstellung des Werts des gerade angewählten Parameters verwendet werden.

Zusammengefaßt ergeben sich damit in Abhängigkeit eines mittels des drehbaren Bedienelements 10 erzeugten Stellsignals und des Schaltelements 12 erzeugten Schaltsignals folgende Aktionen.

| Schaltelement | Drehb. Bedienelement | Aktion |
|---|---|---|
| nicht betätigt | nicht betätigt | keine |
| nicht betätigt | Drehung links | Menüpunkt/Einstellung zurück |
| nicht betätigt | Drehung rechts | Menüpunkt/Einstellung vor |
| betätigt | Drehung links | Erniedrigen/Umschalten der Einstellung |
| betätigt | Drehung rechts | Erhöhen/Umschalten der Einstellung |
| Ende der Betätigung | nicht betätigt | Abschluß der Eingabe |

Bei einer vorteilhaften Ausführungsform einer erfindungsgemäßen Bedienvorrichtung ist ein durch die Steuerung 20 angesteuerter Aktor 15 vorgesehen, der kontextabhängig auf das drehbare Bedienelement 10 ein Drehmoment zur Erzeugung eines Rasteffekts, der mit den durch das Bedienelement erzeugten Inkrementen korreliert, ausübt. Auf diese Weise erhält der Benutzer eine zusätzliche haptische Rückmeldung für die Drehung des drehbaren Bedienelements 10 und die damit gesteuerte Bewegung des Cursors durch verschiedene Einträge einer auf der Anzeigeeinheit dargestellte Auswahlliste derart, daß ein fühlbares Rasten des Bedienelements bei Positionierung des Cursors auf einem Listeneintrag erfolgt.

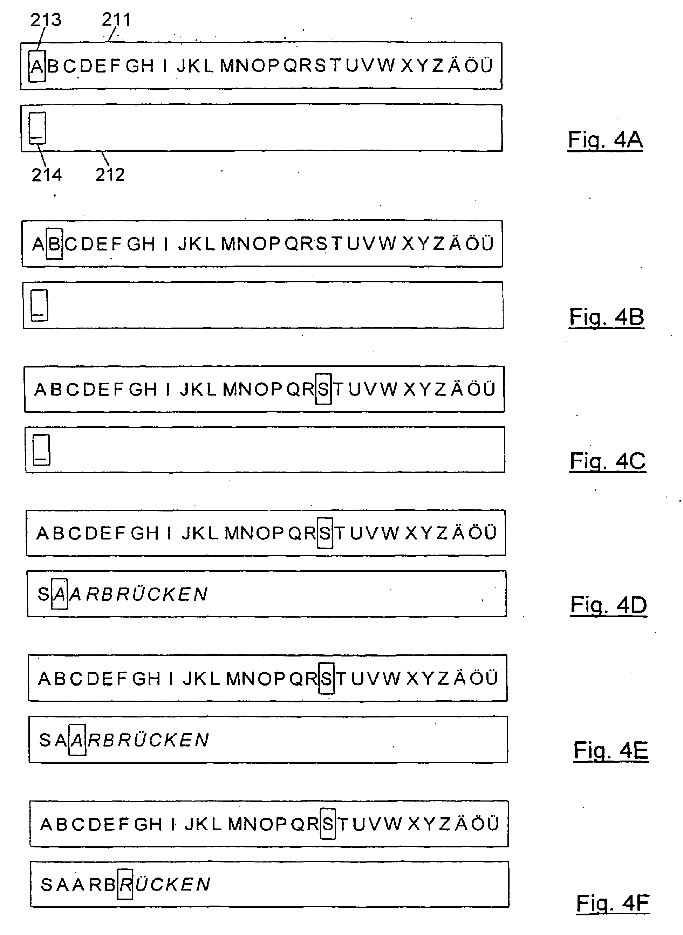

Als weiterer Einsatzzweck für die erfindungsgemäße Bedienvorrichtung bietet sich beispielsweise eine Buchstaben- oder Zahlenfolgeneingabe in ein elektronisches Gerät, wie die Eingabe einer Telefonnummer in ein Telefongerät die Eingabe eines Navigationsziels in ein Fahrzeugnavigationsgerät an, die nachfolgend anhand der Figuren 4A bis 4O erläutert wird. Ferner kann die Bedienvorrichtung auch für eine Menuesteuerung des Fahrzeugnavigationsgeräts zum Aufruf einzelner Funktionen genutzt werden.

Das Navigationsgerät 2 verfügt neben der erwähnten Steuerung 20 und der Anzeigeeinheit 21 über einen Speicher 22, vorzugsweise einem Massenspeicher, beispielsweise in Form einer in ein CD-ROM-Lesegerät eingegelegten CD-ROM, in dem Kartendaten, insbesondere Ortsnamen, gespeichert sind.

Während der Navigationszieleingabe sind auf der Anzeigeeinheit 21 des Navigationsgeräts 21 zwei Zeilen 211 und 212 dargestellt. Die erste Zeile 211 umfaßt sämtliche Buchstaben oder Zeichen des für einen Zielortnamen verfügbaren Alphabets, im vorliegenden Fall die 29 Buchstaben des deutschen Alphabets einschließlich der drei Umlaute "Ä", "Ö" und "Ü". Ein erster Cursor 213 markiert zu Beginn der Zielorteingabe das erste Zeichen des Alphabets, also hier den Buchstaben "A". In der zweiten Zeile 212 wird der eingegeben Zieortname dargestellt. Ein zweiter Cursor 214, der nachfolgend auch als Eingabecursor bezeichnet wird, steht zu Beginn der Eingabe auf der ersten Stelle des Eingabefeldes 212 über einem leeren Eingabefeld (Figur 4A).

Durch Drehen des drehbaren Bedienelements 10 nach rechts wird der erste Cursor 213 in der ersten Zeile über die Buchstaben des Alphabets verschoben, wobei jedes mittels des drehbaren Bedienelements erzeugte Inkrement einem Buchstaben entspricht. Figur 4B zeigt die Situation nach Drehung des Bedienelements um einen einem Inkrement entsprechenden Drehwinkel, so daß nun der erste Cursor 213 über dem Buchstaben "B" positioniert ist.

Durch weiteres Drehen des drehbaren Bedienelements wird schließlich der erste Cursor 213 über dem Buchstaben "S" positioniert (Figur 4C).

Durch Betätigung des Schaltelements 12, also durch Druck auf das Bedienelement 10 oder auf den Stempel 105 als Teil des Bedienelements wird zur Auswahl des mittels des ersten Cursors 213 markierten Buchstabens "S" ein Schaltsignal erzeugt. Der ausgewählte Buchstabe "S" wird im Eingabefeld 212 an der Stelle eingetragen, an der der Eingabecursor 214 positioniert ist, also zu Beginn der Eingabe an der ersten Stelle des Eingabefeldes 212. Nach Eingabe des Buchstaben "S" sucht die Steuerung in der im Speicher 22 abgelegten Kartenbasis nach dem ersten Ortsnamen, der mit dem Buchstaben "S" beginnt. Dies ist im vorliegenden Fall der Ortsname "SAARBRÜCKEN". Im Eingabefeld wird nach Eingabe des Buchstabens "S" somit der Ortsname "SAARBRÜCKEN" dargestellt. Der Eingabecursor 214 steht nach Eingabe des ersten Buchstabens des Zielortsnamens an der zweiten Stelle des Eingabefeldes 212 (Figur 4D), die durch das Navigationsgerät ergänzten Buchstaben "A", "A", "R", "B", "R", "Ü", "C", "K", "E" und "N" sind optisch abgesetzt, beispielsweise farblich hinterlegt oder kursiv, dargestellt.

Ist "SAARBRÜCKEN" der gewünschte Zielortname, kann der im Eingabefeld dargestellte Ortsname durch lange Betätigung des Schaltelements 12 übernommen werden.

Im vorliegenden Fall soll jedoch nicht der Ortsname "SAARBRÜCKEN", sondern "SAARBURG" eingegeben werden. Da die seitens des Navigationsgeräts vorgeschlagenen Buchstaben "A", "A", "R" und "B" sowohl den Beginn des vorgeschlagenen Ortsnamens "SAARBRÜCKEN", als auch des gewünschten Ortsnamens "SAARBURG" darstellen, wird der Eingabecursor 214 durch gleichzeitiges Drehen des drehbaren Bedienelements 10 nach rechts und durch Betätigen des Schaltelements 12 buchstabenweise nach rechts verschoben. Nach einer Drehung um ein erstes Inkrement nach rechts wird demnach der dritte Buchstabe "A" markiert. Der zweite Buchstabe, der das Verschieben des Cursors als korrekt übernommen wird, wird in gleicher Weise wie der durch den Benutzer tatsächlich eingegebene erste Buchstabe "S" dargestellt (Figur 4E).

Durch weiteres Verschieben des Eingabecursors 214 durch gleichzeitige axiale Verschiebung des drehbaren Bedienelements 10 oder von Teilen 105 des drehbaren Bedienelements 10 und Drehung des drehbaren Bedienelements 10 nach rechts wird schließlich der nächste zu ändernde Buchstabe, nämlich das zweite "R" innerhalb des durch das Navigationsgerät vorgeschlagenen Ortsnamens "SAARBRÜCKEN" markiert (Figur 4F).

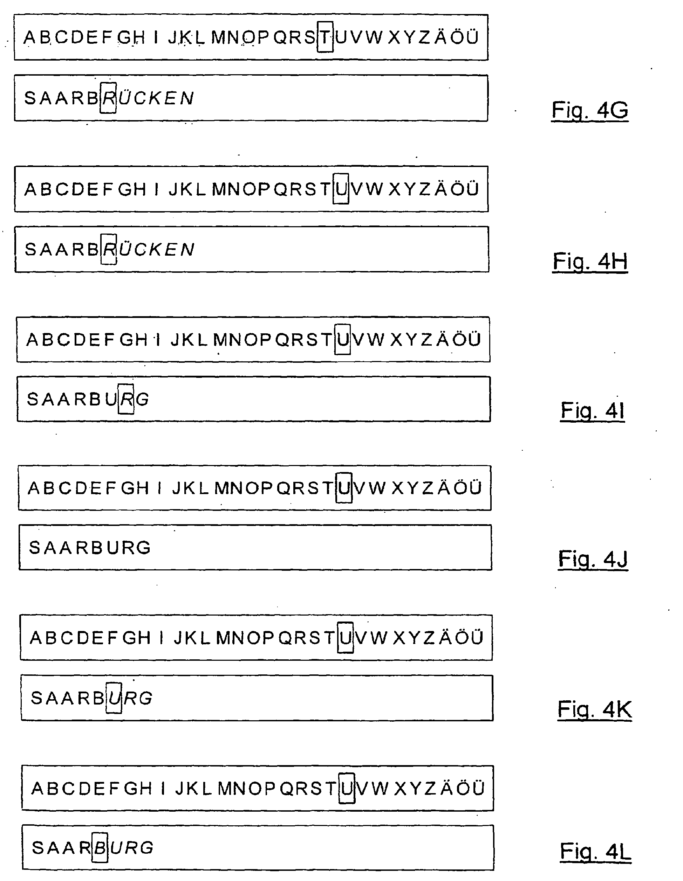

Durch weitere Drehung des Bedienelements 10 nach rechts ohne Betätigung des Schaltelements 12 wird der erste Cursor 213 auf die Buchstaben "T" (Figur 4G) und schließlich "U" (Figur 4H) verschoben.

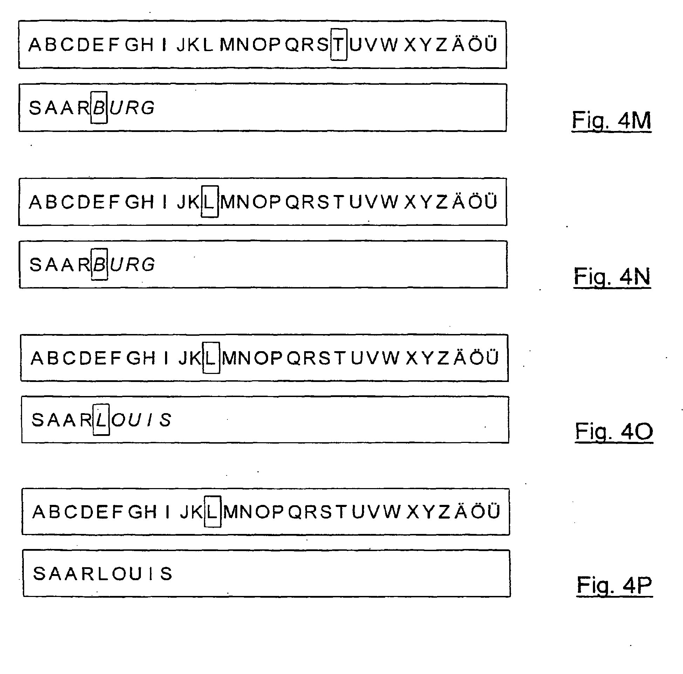

Durch anschließenden kurzen Druck auf das Bedienelement 10 oder den Stempel 105 des Bedienelements 10 wird der markierte Buchstabe "U" ausgewählt und an der durch den Eingabecursor 214 markierten Stelle des Eingabefeldes 212 eingegeben. Der Buchstabe "U" ersetzt nun den dort vorher stehenden Buchstaben "R". Die Steuerung ermittelt im Speicher 22 den ersten Ortsnamen, der mit der eingegebenen Zeichenkette "SAARBU" beginnt. Es ist dies der Ortsname "SAARBURG", der somit im Eingabefeld 212 dargestellt wird. Der Eingabecursor 214 markiert den auf den zuletzt eingegebenen Buchstaben "U" folgenden Buchstaben "R" des vorgeschlagenen Ortsnamens "SAARBURG" (Figur 4.

Da "SAARBURG" der gewünschte Ortsname ist, kann dieser durch lange Betätigung des Schaltelements 12 ausgewählt werden. (Figur 4J).

Soll in der Situtation der Figur 4I statt "SAARBURG" beispielsweise "SAARLOUIS" eingegeben werden, so wird der Eingabecursor 214 durch gleichzeitige Betätigung des Schaltelements 12 und Drehung des Drehknopfs 101 nach links über den Buchstaben "U" (Figur 4K) auf den Buchstaben "B" verschoben. Die auf den markierten Buchstaben folgenden Buchstaben des vorgeschlagenen Ortsnamens werden wiederum optisch abgesetzt dargestellt (Figur 4L).

Der erste Cursor 213, der aufgrund der zuletzt vorgenommenen Eingabe über dem Buchstaben "U" in der ersten Zeile 211 steht, wird durch alleiniges Drehen des Bedienelements 10 nach links in der ersten Zeile über den Buchstaben "T" nach links bis zum Buchstaben "L" verschoben (Figuren 4M, N).

Durch kurzen Druck auf das Bedienelement 10 oder auf den Stempel 105 des Bedienelements 10 wird der in der ersten Zeile 211 markierte Buchstaben "L" an der durch den Eingabecursor 214 markierten Stelle des Eingabefeldes eingetragen und ersetzt somit den dort vorher eingetragenen Buchstaben "B". Die Steuerung ermittelt im Speicher 21 den ersten Ortsnamen, der mit der eingegebenen Buchstabenkette "SAARL" beginnt. Dies ist der Ortsname "SAARLOUIS", der im Eingabefeld 212 dargestellt wird (Figur 4O).

Da "SAARLOUIS" der gewünschte Ortsname ist, wird dieser durch langes Betätigen des Schaltelements 12 übernommen und die Eingabe abgeschlossen.

Die durchgeführten Aktionen sind zusammengefaßt.

| Schaltelement | Drehb. Bedienelement | Aktion |
|---|---|---|
| nicht betätigt | nicht betätigt | keine |
| nicht betätigt | Drehung links | Verschiebung im Buchstabenfeld nach links |
| nicht betätigt | Drehung rechts | Verschiebung im Buchstabenfeld nach rechts |
| betätigt | Drehung links | Verschiebung im Eingabefeld nach links |
| betätigt | Drehung rechts | Verschiebung im Eingabefeld nach rechts |
| kurze Betätigung | nicht betätigt | Übernahme des im Buchstabenfeld markierten Zeichens |
| lange Betätigung | nicht betätigt | Übernahme des im Eingabefeld gezeigten Ortsnamens, Abschluß der Eingabe |

## Patentansprüche

1. Verfahren zur Steuerung einer Markierung in einer zweidimensionalen Auswahlliste,
wobei ein Bedienelement (10) zur Erzeugung eines Stellsignals um eine Achse (11) gedreht wird, wobei hierzu eine Betätigung des Bedienelements (10) mit einem in axialer Richtung unverschiebbaren Drehknopf (101) erfolgt,
wobei ein Schaltsignal von einem Schaltelement (12) erzeugt wird, wobei das Schaltsignal von dem Schaltelement (12) aufgrund einer axialen Verschiebung eines Teils des Bedienelements (10) erzeugt wird, wobei das Schaltelement (12) mit einem im Zentrum des Drehknopfs (101) angeordneten, entlang der Achse (11) verschiebbaren Betätigungselement (105) betätigt wird,
wobei Steuersignale aufgrund eines Steil- oder Schaltsignals und weitere Steuersignale (131) bei gleichzeitigem Vorliegen eines Stell- und eines Schaltsignals von einer Auswertung (13) erzeugt werden,
wobei bei einem Erzeugen des Stellsignals durch Drehen des Drehknopfes (101) eine Markierung in horizontaler Richtung durch Elemente der Auswahlliste geführt wird und wobei bei Drehen des Drehknopfes und gleichzeitiger Betätigung des Schaltelements (12) die Markierung in vertikaler Richtung durch die Elemente der Auswahlliste geführt wird.

2. Verfahren nach Anspruch 1, wobei das Bedienelement (10) oder ein Teil des Bedienelements in eine axiale Ruhelage durch Mittel (121,122,126), vorzugsweise Federmittel, gebracht wird, die zur Rückführung den oder des Teils des Bedienelements (10) in die axiale Ruhelage nach einer axialen Auslenkung dienen.

## Claims

1. Method for controlling a marker in a two-dimensional selection list,
wherein an operator control element (10) is rotated about an axis (11) in order to produce an actuating signal, wherein this involves the operator control element (10) being operated using a rotary knob (101) which cannot be moved in an axial direction, wherein a switching signal is produced by a switching element (12), wherein the switching signal is produced by the switching element (12) on the basis of axial movement of a portion of the operator control element (10), wherein the switching element (12) is operated using an operating element (105) which is arranged in the centre of the rotary knob (101) and which can be moved along the axis (11),
wherein control signals are produced by an evaluation unit (13) on the basis of an actuating or switching signal, and further control signals (131) are produced by an evaluation unit (13) when an actuating signal and a switching signal are present simultaneously,
wherein production of the actuating signal by rotating the rotary knob (101) prompts a marker to be guided through elements of the selection list in the horizontal direction and wherein rotation of the rotary knob and simultaneous operation of the switching element (12) prompt the marker to be guided through the elements of the selection list in the vertical direction.

2. Method according to Claim 1, wherein the operator control element (10) or a portion of the operator control element is put into an axial position of rest by means (121, 122, 126), preferably spring means, which serve to return the operator control element (10) or a portion of the operator control element (10) to the axial position of rest following an axial excursion.

## Revendications

1. Procédé de commande d'un repérage dans une liste bidimensionnelle de sélection,
dans lequel un élément d'actionnement (10) qui forme un signal de réglage est tourné autour d'un axe (11), ce qui s'effectue en activant l'élément d'actionnement (10) par un bouton rotatif (101) qui ne peut coulisser dans la direction axiale,
un signal de commutation étant formé par un élément de commutation (12),
le signal de commutation étant formé par l'élément de commutation (12) à partir d'un déplacement axial d'une partie de l'élément d'actionnement (10),
l'élément de commutation (12) étant actionné par un élément d'actionnement (105) apte à coulisser le long de l'axe (11) et disposé au centre du bouton rotatif (101),
les signaux de commande étant formés sur base d'un signal de réglage ou de commutation et d'autres signaux de commande (131) s'il existe en même temps un signal de réglage et un signal de commutation provenant d'une évaluation (13),
un repère étant guidé dans la direction horizontale le long des éléments de la liste de sélection lorsqu'un signal de réglage est formé par rotation du bouton rotatif (101),
le repère étant guidé dans la direction verticale suivant les éléments de la liste de sélection lorsque le bouton rotatif est tourné et qu'en même temps l'élément de commutation (12) est actionné.

2. Procédé selon la revendication 1, dans lequel l'élément d'actionnement (10) ou une partie de l'élément d'actionnement sont ramenés dans une position axiale de repos par des moyens (121, 122, 126), de préférence des moyens élastiques, qui ramènent l'élément d'actionnement (10) ou une partie de l'élément d'actionnement (10) dans la position axiale de repos après déviation axiale.
